**Europäisches Patentamt**

**European Patent Office**

**Office européen des brevets**

(11) Veröffentlichungsnummer : **0 218 890**
**B1**

(12) **EUROPÄISCHE PATENTSCHRIFT**

(45) Veröffentlichungstag der Patentschrift :
**11.01.89**

(21) Anmeldenummer : **86112242.2**

(22) Anmeldetag : **04.09.86**

(51) Int. .Cl.⁴ : **B 60 J   7/04**

(54) **Schiebedachanordnung.**

(30) Priorität : **13.09.85 DE 3532679**

(43) Veröffentlichungstag der Anmeldung :
**22.04.87 Patentblatt 87/17**

(45) Bekanntmachung des Hinweises auf die Patenterteilung : **11.01.89 Patentblatt 89/02**

(84) Benannte Vertragsstaaten :
**FR GB IT SE**

(56) Entgegenhaltungen :
**DE–A– 3 221 487**
**US–A– 4 210 359**

(73) Patentinhaber : **Adam Opel Aktiengesellschaft**
**Bahnhofsplatz 1 Postfach 1560**
**D-6090 Rüsselsheim (DE)**

(72) Erfinder : **Reintges, Rolf, Dipl.-Ing. (FH)**
**Hessenring 44**
**D-6090 Rüsselsheim (DE)**
Erfinder : **Stahlhut, Richard, Dipl.-Ing. (FH)**
**Hauffstrasse 33**
**D-6050 Offenbach (DE)**

(74) Vertreter : **Elbert, Karl, Dipl.-Ing. et al**
**Adam Opel AG Patentabteilung Bahnhofsplatz 1 Postfach 1560**
**D-6090 Rüsselsheim (DE)**

## Beschreibung

Die Erfindung bezieht sich auf eine Schiebedachanordnung, deren Schiebedeckel seitliche, mit jeweils einer Kulissenlaufbahn versehene Führungsarme aufweist, die jeweils zwischen zwei U-förmige Schenkel eines in einer Gleitschiene geführten Gleitschuhes greifen und bei der jeweils ein Führungsbolzen durch die Kulissenlaufbahn geführt und an den Schenkeln der Gleitschuhe befestigt ist. Solche Schiebedachanordnungen sind in heutigen Personenkraftwagen vorgesehen und beispielsweise in der DE-A-32 21 487 beschrieben.

Bei Schiebedachanordnungen besteht das generelle Problem, daß es infolge von Toleranzabweichungen oder Montageungenauigkeiten zu einer Schwergängigkeit oder gar zu einem Verklemmen des Schiebedaches kommt. Dieses Problem hat man bislang durch hohe Fertigungsgenauigkeit und entsprechende Sorgfalt bei der Montage zu vermeiden versucht. Nicht immer führte das zu einem Erfolg. Immer jedoch sind enge Fertigungstoleranzen eine Ursache für eine erhebliche Erhöhung der Fertigungskosten.

Der Erfindung liegt die Aufgabe zugrunde, eine Schiebedachanordnung der eingangs genannten Art derart zu gestalten, daß der Gefahr einer Schwergängigkeit oder gar eines Verklemmens des Schiebedaches mit möglichst geringem Aufwand begegnet ist.

Diese Aufgabe wird auf überraschend einfache Weise dadurch gelöst, daß die Führungsbolzen im Bereich der Kulissenlaufbahn ballig ausgebildet sind.

Durch diese erfindungsgemäße Gestaltung kommt es selbst dann nicht zu einer Schwergängigkeit oder einem Verklemmen der Führungsbolzen in den Kulissenlaufbahnen, wenn infolge von Toleranzen oder Montageungenauigkeiten die Führungsarme und Führungsschuhe schräg zueinander stehen. Dadurch können die Schiebedachbauteile wesentlich grober toleriert werden, als das bisher der Fall war, so daß sich die Schiebedachanordnung insgesamt verbilligt.

Besonders leichtgängig ist das Schiebedach zu verschieben, wenn die Führungsbolzen kunststoffumspritzte Stahlbolzen sind.

Die Erfindung läßt zahlreiche Ausführungsformen zu. Eine davon ist in der Zeichnung dargestellt und wird nachfolgend beschrieben. Die Zeichnung zeigt in

Fig. 1 eine abgebrochene Draufsicht auf ein Kraftfahrzeugdach mit der erfindungsgemäßen Schiebedachanordnung,

Fig. 2 einen Schnitt durch einen Teilbereich des Kraftfahrzeugdaches entlang der Linie II-II in Figur 1,

Fig. 3 eine vergrößerte Darstellung einer in Figur 2 mit III gekennzeichneten Einzelheit.

Die erfindungsgemäße Schiebedachanordnung kann sowohl Schiebedächer einschließen, bei denen der Schiebedeckel nach Absenken seiner Hinterkante zur Freilegung der Dachöffnung unter die hintere, feste Dachfläche verschiebbar ist, als auch sogenannte Schiebehebedächer, bei denen der Schiebedeckel außerdem um eine in der Nähe seiner Vorderkante verlaufende Schwenkachse aus der Dachfläche herausgeschwenkt werden kann.

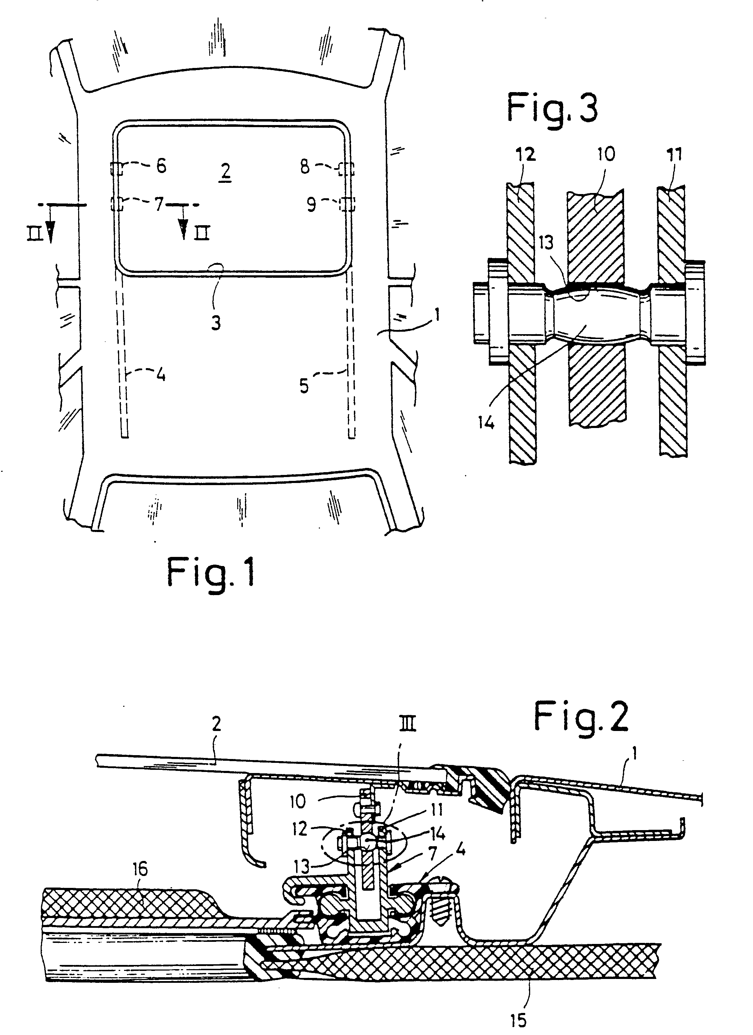

In der Figur 1 ist von einem Personenkraftwagen ein festes Fahrzeugdach 1 dargestellt, in dessen vorderem Bereich ein durch einen Schiebedeckel 2 verschließbarer Dachausschnitt 3 vorgesehen ist. Unterhalb des festen Fahrzeugdaches 1 ist an jeder Fahrzeugseite seitlich des Dachausschnittes 3 jeweils eine Führungsschiene 4, 5 vorgesehen, in die Gleitschuhe 6, 7, 8, 9 geführt sind. Der Schiebedeckel 2 wird von diesen Gleitschuhen 6-9 begrenzt verschieblich gehalten, was genauer der Figur 2 zu entnehmen ist.

In der Figur 2 sind zunächst wieder das Fahrzeugdach 1 und der Schiebedeckel 2 zu erkennen. Weiterhin sind der hintere Führungsschuh 7 und die Führungsschiene 4 gezeigt. Zu erkennen ist, daß der Führungsschuh 7 in der Führungsschiene 4 in Fahrzeuglängsrichtung verschiebbar ist, wodurch sich die Möglichkeit der Längsverschiebung des Schiebedeckels 2 ergibt. Am Schiebedeckel 2 ist fahrzeuginnenseitig ein Führungsarm 10 befestigt, der zwischen zwei nach oben gerichtete, U-förmige Schenkel 11, 12 des Führungsschuhes 7 greift. Im Führungsarm 10 ist eine Kulissenlaufbahn 13 vorgesehen, durch die ein im Bereich dieser Kulissenlaufbahn 13 balliger Führungsbolzen 14 greift, der seinerseits fest in den Schenkeln 11, 12 des Gleitschuhes 7 gehalten ist. Zum besseren Verständnis der Gesamtanordnung sind in Figur 2 desweiteren ein Teilbereich eines üblichen Dachhimmels 15 und eines Deckelhimmels 16 dargestellt.

Die Figur 3 zeigt gegenüber der Figur 2 stark vergrössert, wie der Führungsbolzen 14 den Führungsarm 10 mit den Schenkeln 11, 12 verbindet. Der Verlauf der Kulissenlaufbahn 13 ist zwar auch in dieser Darstellung nicht zu erkennen, jedoch ist dem Fachmann von vergleichbaren Schiebedachanordnungen bekannt, daß die Kulissenlaufbahn 13 zwei in etwa parallele, zur Ebene des Schiebedeckels 2 verlaufende Abschnitte hat, die durch einen schräg verlaufenden Abschnitt miteinander verbunden sind. Durch diesen Verlauf ergibt sich die Möglichkeit der Absenkung des Schiebedeckels 2, um ihn anschließend nach hinten verschieben zu können und zusätzlich die Möglichkeit, ihn nach außen zu verschwenken. Die Figur 3 zeigt deutlich, daß der Führungsbolzen 14 im Bereich der Kulissenlaufbahn 13 ballig ist. Dadurch gleitet er auch dann leichtgängig in der Kulissenlaufbahn 13, wenn der Führungsarm 10 nicht genau parallel zu den Schenkeln 11, 12 ausgerichtet ist.

Der Führungsbolzen 14 kann ausschließlich aus Stahl bestehen oder zusätzlich einen Kunststoffüberzug haben, um die Reibung weiter zu vermindern. Es kann sich bei ihm jedoch auch um ein Preß- oder Kaltstanzteil handeln.

**Patentansprüche**

1. Schiebedachanordnung, deren Schiebedeckel (2) seitliche, mit jeweils einer Kulissenlaufbahn (13) versehene Führungsarme (10) aufweist,
die jeweils zwischen zwei U-förmige Schenkel
(11, 12) eines in einer Gleitschiene (4, 5) geführten
Gleitschuhes (6, 7, 8, 9) greifen und bei der
jeweils ein Führungsbolzen (14) durch die Kulissenlaufbahn (13) geführt und an den Schenkeln
(11, 12) der Gleitschuhe (6, 7, 8, 9) befestigt ist,
dadurch gekennzeichnet, daß die Führungsbolzen (14) im Bereich der Kulissenlaufbahn (13)
ballig ausgebildet sind.

2. Schiebedachanordnung nach Anspruch 1,
dadurch gekennzeichnet, daß die Führungsbolzen (14) kunststoffumspritzte Stahlbolzen sind.

**Claims**

1. A sliding roof arrangement whose sliding
cover (2) has lateral guide arms (10), each of
which is provided with a link track (13) and
engages between two U-shaped limbs (11, 12) of a
sliding shoe (6, 7, 8, 9) guided in a slide rail (4, 5)
and in which a guide pin (14) is guided through
each link track (13) and is fastened on the limbs
(11, 12) of the sliding shoes (6, 7, 8, 9), characterised in that the guide pins (14) are crowned in the
region of the link track (13).

2. A sliding roof arrangement as in claim 1,
characterised in that the guide pins (14) are
plastic extrusion-coated steel pins.

**Revendications**

1. Dispositif de toit ouvrant, dont le couvercle
coulissant (2) présente des bras de guidage (10)
latéraux, chacun pourvu d'une piste coulissante
(13), bras qui sont chacun en prise entre deux
ailes (11, 12) en forme de U, d'un patin de
glissement (6, 7, 8, 9) guidé dans une glissière de
glissement (4, 5) et pour lequel chaque fois un
boulon de guidage (14) est guidé à travers la piste
coulissante et fixé aux ailes (11, 12) du patin de
glissement (6, 7, 8, 9), caractérisé en ce que les
boulons de guidage (14) sont réalisés sous forme
bombée, dans la zone de la piste coulissante (13).

2. Dispositif de toit ouvrant selon la revendication 1, caractérisé en ce que les boulons de
guidage (14) sont des boulons en aciers enrobés
de matière plastique par injection.

Fig. 3

Fig. 1

Fig. 2